(19) **Europäisches Patentamt / European Patent Office / Office européen des brevets**

(11) **EP 4 629 469 A1**

(12) **EUROPEAN PATENT APPLICATION**
published in accordance with Art. 153(4) EPC

(43) Date of publication:
**08.10.2025 Bulletin 2025/41**

(21) Application number: **24844519.9**

(22) Date of filing: **26.06.2024**

(51) International Patent Classification (IPC):
**H02J 3/38** (2006.01)     **H02J 3/18** (2006.01)
**H02J 3/00** (2006.01)

(86) International application number:
**PCT/CN2024/101737**

(87) International publication number:
**WO 2025/020825 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023   CN 202310922278**

(71) Applicant: **Huaneng Clean Energy Research
Institute
Beijing 102209 (CN)**

(72) Inventors:
• **BA, Lei**
  **Beijing 102209 (CN)**
• **GUO, Xiaojiang**
  **Beijing 102209 (CN)**
• **HE, Weiguo**
  **Beijing 102209 (CN)**
• **LI, Zheng**
  **Beijing 102209 (CN)**

(74) Representative: **Lambsdorff & Lange
Patentanwälte
Partnerschaft mbB
Grillparzerstraße 12A
81675 München (DE)**

(54) **WIND TURBINE-PARTICIPATING POWER SYSTEM, AND WIND TURBINE TORQUE OSCILLATION SUPPRESSION METHOD AND APPARATUS**

(57)    The present invention discloses a power system using a wind turbine, a method for suppressing torsional oscillation of a wind turbine and device. The method comprises: receiving a rotor angular speed information of the wind turbine in the power system using a wind turbine; in respond to the frequency regulation performed by the power system using a wind turbine, inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer; according to the reactive power compensation information, suppressing the wind turbine torsional oscillation generated by the frequency regulation. Through the present invention, a robust wind turbine torsional oscillation damper can be configured to provide stable damping support for the system, effectively ensuring the stability of the wind turbine shaft system.

Receiving a rotor angular speed information of the wind turbine in the power system using a wind turbine — 101

In respond to the frequency regulation performed by the power system using a wind turbine, inputting the rotor angular speed information of the wind turbine to a preconfigured wind turbine torsional oscillation damper, so as to cause the wind turbine torsional oscillation damper outputting a reactive power compensation information — 102

According to the reactive power compensation information, suppressing the wind turbine torsional oscillation generated by the frequency regulation — 103

Fig.1

**EP 4 629 469 A1**

**Description**

**FIELD OF THE INVENTION**

The present invention relates to the field of wind power generation system, particularly to a power system using a wind turbine, a method for suppressing torsional oscillation of a wind turbine and device.

**BACKGROUND OF THE INVENTION**

In a power system, torsional oscillation is a vibration that occurs in the shaft system of wind turbines. Due to the twisting deformation caused by mechanical torque applied to the shaft system, mechanical stress is generated. Torsional oscillation is generated by torsional deformation and is a measure of mechanical stress. This kind of oscillation can cause shaft vibration in the shaft system, reduce the life of the shaft, and in more serious cases, lead to shaft damage. In addition, the torsional oscillation of the shaft system will also be converted into electrical system oscillation. This kind of the oscillation will interact with existing oscillation modes in the power system and cause resonance, which is not conducive to the stability of the power system.

The existing wind turbine torsional oscillation dampers are mostly designed by the traditional residue method, which is designed for a fixed oscillation of the wind turbine and has low robustness. Thus, a robust wind turbine torsional oscillation damper was introduced.

The robust wind turbine torsional oscillation damper can provide stable damping support when the wind turbine torsional oscillation frequency changes, ensuring the stability of the wind turbine shaft system. When designing a robust wind turbine torsional oscillation damper, it is necessary to design a weighting function for the wind turbine shaft system. However, existing research mostly designs weighting functions according to the experiences, and the selected weighting functions have high limitations and require extensive simulation verification of control effectiveness, resulting in low practical applicability. In addition, current optimization research on weighting functions is mostly applied to low-frequency oscillation suppression in power systems, and is not applicable to the weighting functions for suppressing wind turbine torsional oscillations.

That is to say, due to the inability to effectively design the weighting function of the wind turbine shaft system, it is also impossible to effectively design the robust wind turbine torsional oscillation damper, and thus unable to provide stable damping support to the system, which is not conducive to the stability of the wind turbine shaft system.

**SUMMARY OF THE INVENTION**

The present invention provides a wind power generation system using a wind turbine, a method for suppressing torsional oscillation of a wind turbine and device to resolve at least one of the issues mentioned above.

According to a first aspect of the present invention, there is provided a method for suppressing torsional oscillation of a wind turbine, wherein the method is applied to a power system using a wind turbine with frequency regulation function, and the method comprises: receiving a rotor angular speed information of the wind turbine in the power system using a wind turbine; in respond to the frequency regulation performed by the power system using a wind turbine, inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer; according to the reactive power compensation information, suppressing the wind turbine torsional oscillation generated by the frequency regulation.

Specifically, the wind turbine torsional oscillation damper is configured as follows: constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model; according to a predetermined optimization objective, performing a parameter configuration operation on the wind turbine torsional oscillation damper to be configured based on the weighting function model and the system state model.

Preferably, the predetermined optimization objective is to minimize a performance indicator of the wind turbine torsional oscillation damper, and "weighting function is configured based on the Grey Wolf Optimizer and the weighting function model" comprises: determining an optimized parameter of the weighting function model satisfying the predetermined optimization objective by using the Grey Wolf Optimizer; configuring the weighting function according to the determined optimized parameter of the weighting function model.

Specifically, "according to a predetermined optimization objective, performing a parameter configuration operation on the wind turbine torsional oscillation damper to be configured based on the weighting function model and the system state model" comprises: configuring the system state model according to a historical information of a wind turbine state, so as to cause the system state model outputting the historical information of the rotor angular speed of a wind turbine; inputting the historical information of the rotor angular speed of a wind turbine to the wind turbine torsional oscillation damper, and according to the weighting function model satisfying the predetermined optimization objective and a configured system state model, performing the parameter configuration operation on the wind turbine torsional oscillation damper to be configured.

According to a second aspect of the present invention, there is provided a wind turbine torsional oscillation suppression device, wherein the device is applied to a power system using a wind turbine with frequency regulation function, and the device comprises: an information receiving unit, for receiving a rotor angular speed information of a wind turbine in the power systems using a wind turbine; a compensation information outputting unit, for inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer, in respond to the frequency regulation performed by the power system using a wind turbine; an oscillation suppression unit, for suppressing the wind turbine torsional oscillation generated by the frequency regulation, according to the reactive power compensation information.

Specifically, the above device further comprises: a damper configuration unit, for configuring the wind turbine torsional oscillation damper.

The damper configuration unit comprises: a model construction module, for constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model; a damper parameter configuration module, for performing a parameter configuration operation on the wind turbine torsional oscillation damper to be configured based on the weighting function model and the system state model according to a predetermined optimization objective.

The above predetermined optimization objective is to minimize a performance indicator of the wind turbine torsional oscillation damper, and the device further comprises: a weighting function configuration unit, for configuring the weighting function based on the Grey Wolf Optimizer and the weighting function model.

The weighting function configuration unit comprises: an optimization parameter determination module, for determining an optimized parameter of the weighting function model satisfying the predetermined optimization objective by using the Grey Wolf Optimizer; a weighting function configuration module, for configuring the weighting function according to the determined optimized parameter of the weighting function model.

Specifically, the above damper parameter configuration module comprises: a historical information processing submodule, for configuring the system state model according to a historical information of a wind turbine state, so as to cause the system state model outputting the historical information of the rotor angular speed of a wind turbine; a damper parameter configuration submodule, for inputting the historical information of the rotor angular speed of a wind turbine to the wind turbine torsional oscillation damper, and performing the parameter configuration operation on the wind turbine torsional oscillation damper to be configured according to the weighting function model satisfying the predetermined optimization objective and a configured system state model.

According to a third aspect of the present invention, there is provided a power system using a wind turbine, the power system using a wind turbine has a frequency regulation function, and the power system using a wind turbine comprises the above wind turbine torsional oscillation suppression device.

Meanwhile, the present invention also provides a computer apparatus comprising a memory, a processor, and a computer program stored on the memory and executable on the processor, wherein the processor implements the above method when executing the computer program.

Meanwhile, the present invention also provides a computer-readable storage medium storing a computer program for executing the above method.

It can be seen from the above technical solution that, when processing frequency regulation in a power system using a wind turbine, this technical solution receives a rotor angular speed information of the wind turbine in the power system using a wind turbine, inputs the rotor angular speed information of the wind turbine to a preconfigured wind turbine torsional oscillation damper, then the wind turbine torsional oscillation damper outputs a reactive power compensation information, and after that according to the reactive power compensation information, suppresses the wind turbine torsional oscillation generated by frequency regulation processing. This technical solution applies the Grey Wolf Optimizer to optimize and solve the weighting function which satisfies the stability design of the wind turbine shaft system, and can quickly obtain the optimal weighting function that satisfies the design requirements of the wind turbine torsional oscillation damper, thereby ensuring that robust characteristics of the configured robust wind turbine torsional oscillation damper in the event of system disturbance and uncertainty in the frequency of torsional oscillation after wind turbine participation in frequency regulation, and by providing stable damping support to the system through a robust wind turbine torsional oscillation damper, the stability of the wind turbine shaft system can be effectively ensured.

In order to make the above and other objectives, features and advantages of the present invention more apparent and understandable, the following preferred examples are presented and in accordance with the attached drawings, a detailed explanation is as follows.

## BRIEF DESCRIPTION OF THE DRAWINGS

In order to more clearly illustrate the examples of the present invention or the technical solutions in the prior art, the drawings required for use in the examples or the description of the prior art will be briefly introduced below. Obviously, the drawings described below are only some examples of the present invention. For the ordinary skilled person in the art, other drawings can be obtained according to these drawings without paying creative work.

Fig.1 is a flowchart of a method for suppressing torsional oscillation of a wind turbine according to an example of the present invention;
Fig.2 is a schematic diagram of the frequency regulation model of a power system using a wind turbine according to an example of the present invention;
Fig.3 is a flowchart of optimizing and solving constraint conditions based on Grey Wolf Optimizer according to an example of the present invention;
Fig.4 is a structural diagram of the wind turbine torsional oscillation suppression device.

## DETAILED DESCRIPTION OF THE INVENTION

Below, the technical solutions in the examples of the present invention will be clearly and completely described in conjunction with the accompanying drawings. Obviously, the described examples are only a part of the examples of the present invention, not all examples. Based on the examples of the present invention, all other examples obtained by the ordinary skilled person in the art without creative work are within the protection scope of the present invention.

In the process of implementing this application, the applicant found the relative technologies as follows: Robust control algorithm can ensure the robust characteristics of the system when the model, parameters, and external disturbances are uncertain, the robust control algorithm can compensate for the reliance on accurate models in traditional controller design. When designing a robust controller, the selection of the weighting function determines the control effect of the robust controller, and using the optimal weighting function can better ensure the robust characteristics of the controller.

In recent years, some scholars have used Particle Swarm Optimization to optimize and solve weighting functions. However, due to the limitations of learning factors, speed, and direction, using Particle Swarm Optimization to solve the weighting function designing is prone to getting stuck in local optima. At the same time, Particle Swarm Optimization requires the use of a large number of particle populations for optimization, which reduces computational speed.

Considering the current inability to effectively design the weighting function of the wind turbine shaft system, and thus the inability to effectively design a robust wind turbine torsional oscillation damper, based on this, the present invention provides a solution for suppressing torsional oscillation of a wind turbine. This solution applies the Grey Wolf Optimizer to optimize and solve the weighting function which satisfies the stability design of the wind turbine shaft system, and can quickly obtain the optimal weighting function that satisfies the design requirements of the wind turbine torsional oscillation damper, thereby ensuring that robust characteristics of the designed robust wind turbine torsional oscillation damper in the event of system disturbance and uncertainty in the frequency of torsional oscillation after wind turbine participation in frequency regulation, and by providing stable damping support to the system through a robust wind turbine torsional oscillation damper, the stability of the wind turbine shaft system can be effectively ensured.

The following provides a detailed description of the examples of the present invention in conjunction with the accompanying drawings.

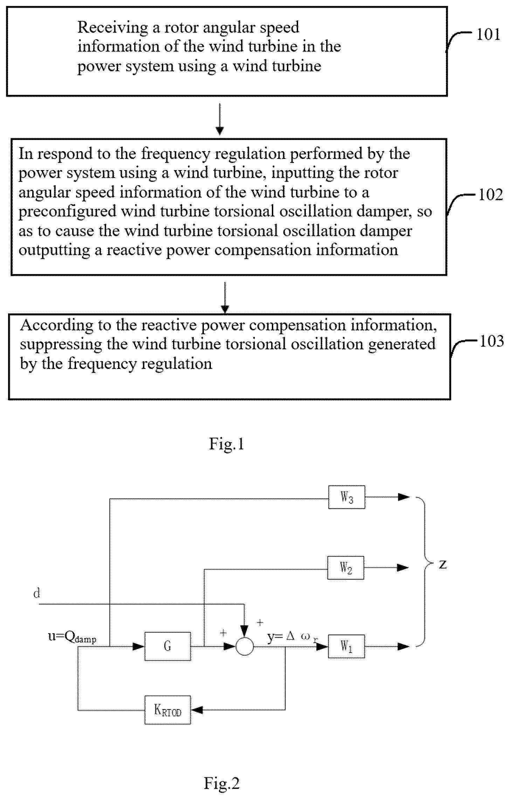

The examples of the present invention provide a method for suppressing torsional oscillation of a wind turbine, which can be applied to the power system using a wind turbine with frequency regulation function. Fig.1 is a flowchart of a method for suppressing torsional oscillation of a wind turbine according to an example of the present invention. As shown in Fig. 1, the method comprises the steps 101-103. Below are detailed descriptions of each step.

Step 101, Receiving a rotor angular speed information of the wind turbine in the power system using a wind turbine.

In one example, the rotor angular speed information of the wind turbine may be the rotor angular speed deviation of the wind turbine.

Step 102, In respond to the frequency regulation performed by the power system using a wind turbine, inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer.

In an example, the wind turbine torsional oscillation damper can be configured through the following steps (1) and (2):

(1) constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model;

(2) according to a predetermined optimization objective, performing a parameter configuration operation on the wind turbine torsional oscillation damper to be configured based on the weighting function model and the system state model.

In practical operation, the predetermined optimization objective is to minimize a performance indicator of the wind turbine torsional oscillation damper, and the above "weighting function is configured based on the Grey Wolf Optimizer and the weighting function model" comprises: determining an optimized parameter of the weighting function model satisfying the predetermined optimization objective by using the Grey Wolf Optimizer; configuring the weighting function according to the determined optimized parameter of the weighting function model.

Subsequently, execute the step (2), which is configuring the system state model according to a historical information of a wind turbine state, so as to cause the system state model outputting the historical information of the rotor angular speed of a wind turbine; then inputting the historical information of the rotor angular speed of a wind turbine to the wind turbine torsional oscillation damper, and according to the weighting function model satisfying the predetermined optimization objective and a configured system state model, performing the parameter configuration operation on the wind turbine torsional oscillation damper to be configured.

In the specific implementation process, the Grey Wolf Optimizer has the advantages of high solving speed and not easily getting stuck in local optimality. The Grey Wolf Optimizer is a new swarm intelligence optimization solving algorithm. When optimizing the solution, by simulating the hunting behavior of grey wolves, the grey wolves corresponding to the top three fitness values are selected and saved in the optimization solution. The remaining grey wolves continuously approach the top three and hunt to find the global optimal value.

Step 103, Suppressing the wind turbine torsional oscillation generated by the frequency regulation, according to the reactive power compensation information.

In the examples of the present invention, when processing frequency regulation in a power system using a wind turbine, this present invention receives a rotor angular speed information of the wind turbine in the power system using a wind turbine, inputs the rotor angular speed information of the wind turbine to a preconfigured wind turbine torsional oscillation damper, then the wind turbine torsional oscillation damper outputs a reactive power compensation information, and after that according to the reactive power compensation information, suppresses the wind turbine torsional oscillation generated by frequency regulation processing. The examples of the present invention apply the Grey Wolf Optimizer to optimize and solve the weighting function which satisfies the stability design of the wind turbine shaft system, and can quickly obtain the optimal weighting function that satisfies the design requirements of the wind turbine torsional oscillation damper, thereby ensuring that robust characteristics of the configured robust wind turbine torsional oscillation damper in the event of system disturbance and uncertainty in the frequency of torsional oscillation after wind turbine participation in frequency regulation, and by providing stable damping support to the system through a robust wind turbine torsional oscillation damper, the stability of the wind turbine shaft system can be effectively ensured.

In order to better understand the present invention, the examples of the present invention will be described in detail below with reference to the example of the frequency regulation model of a power system using a wind turbine in Fig.2.

The example model of the frequency regulation model in a power system using a wind turbine in Fig.2 is designed with a robust wind turbine torsional oscillation damper framework based on $H_\infty$-mixed sensitivity. In this example model, the input and output of the wind turbine torsional oscillation damper were designed. Specifically, the rotor angular speed deviation $\Delta\omega_r$ of the wind turbine is selected as the input of the damper, and the reactive power compensation $Q_{damp}$ is selected as the output of the damper. $Q_{damp}$ is added to the decoupled reactive power control loop on the wind turbine rotor side. Linearize frequency regulation of the power system using a wind turbine based on the input and output, and it can obtain the state space equation of the system, represented by G in the figure. When processing the frequency regulation of the power system using a wind turbine, it can cause a decrease in the damping ratio of the wind turbine's torsional oscillation, and in some severe cases, a negative damping ratio may occur, leading to system instability.

In Fig.2, u (i.e., $Q_{damp}$) is the output of a robust wind turbine torsional oscillation damper, which will be added to the reactive power control on the rotor side of the wind turbine to suppress the wind turbine torsional oscillation; y (i.e., $\Delta\omega_r$) is the input of a robust wind turbine torsional oscillation damper, and detects the oscillation of the wind turbine shaft system when participating in power system frequency regulation by observing the rotor angular speed deviation of a wind turbine; $K_{RTOD}$ is the robust wind turbine torsional oscillation damper to be configured; d is the uncertain disturbance factor that occurs during system operation, and z is the output used to measure $H_\infty$ control indicators.

When configuring a robust wind turbine torsional oscillation damper, the sensitivity function $S = (I\text{-}GK_{RTOD})^{-1}$, the supplementary sensitivity function $T = I\text{-}S$, and the input signal dependent function $K_{RTOD}S$ acts through weighting functions $W_1$, $W_2$, $W_3$ to satisfy the performance and robustness indicators of the robust wind turbine torsional oscillation damper, wherein, I is the identity matrix. The configured robust controller $K_{RTOD}$ should satisfy the following inequality (1):

$$\left\| \begin{bmatrix} W_1 S \\ W_2 T \\ W_3 K_{RTOD} S \end{bmatrix} \right\|_\infty < 1 \qquad (1)$$

Subsequently, the weighting function in Fig.2 was designed according to the robust oscillation suppression effect required by the wind turbine torsional oscillation damper, and the optimal weighting function was solved using the Grey Wolf Optimizer to satisfy the robustness of oscillation suppression in the wind turbine shaft system.

In the specific implementation process, the weighting function has a significant impact on the oscillation suppression effect of the robust wind turbine torsional oscillation damper. For the standard $H_\infty$-mixed sensitivity designing, the following transfer functions can be selected as the general expression of the weighting function to be designed, represented by the following formulas (2) - (4):

$$W_1 = \frac{1}{1 + K_{11}s + K_{12}s^2} \qquad (2)$$

$$W_2 = K_2 \qquad (3)$$

$$W_3 = \frac{K_3 s}{s + \omega_3} \qquad (4)$$

In the above formulas, s is the sensitivity function; $K_{11}$ and $K_{12}$ are the coefficients of the weighting function $W_1$; $K_2$ is the coefficient of the weighted function $W_2$, which is a constant positive value; The weighting function $W_3$ is a high pass filter, $K_3$ and $\omega_3$ respectively represent high-frequency gain and high-frequency bandwidth.

In the examples of the present invention, the optimization objective is to minimize the performance indicators of the robust wind turbine torsional oscillation damper.

Specifically, the Grey Wolf Optimizer is used to optimize and solve for the optimal value of the weighted function parameters that minimize the $H_\infty$-norm of the robust wind turbine torsional oscillation damper designing. The optimization objective of the Grey Wolf Optimizer is to minimize the fitness function, as shown in formula (5): wherein,

$$\min\left(1 / fit\right) \qquad (5)$$

$$fit = \left\| \begin{bmatrix} W_1 S \\ W_2 T \\ W_3 K_{RTOD} S \end{bmatrix} \right\|_\infty \circ$$

The optimization of constraint conditions can be achieved through the following formulas (6)-(11):

$$\left\| \begin{bmatrix} W_1 S \\ W_2 T \\ W_3 K_{RTOD} S \end{bmatrix} \right\|_\infty < 1 \qquad (6)$$

$$K_{11,min} < K_{11} < K_{11,max} \qquad (7)$$

$$K_{12,min} < K_{12} < K_{12,max} \qquad (8)$$

$$0 < K_2 < K_{2,max} \qquad (9)$$

$$K_{3,min} < K_3 < K_{3,max} \qquad (10)$$

$$\omega_{3,min} < \omega_3 < \omega_{3,max} \qquad (11)$$

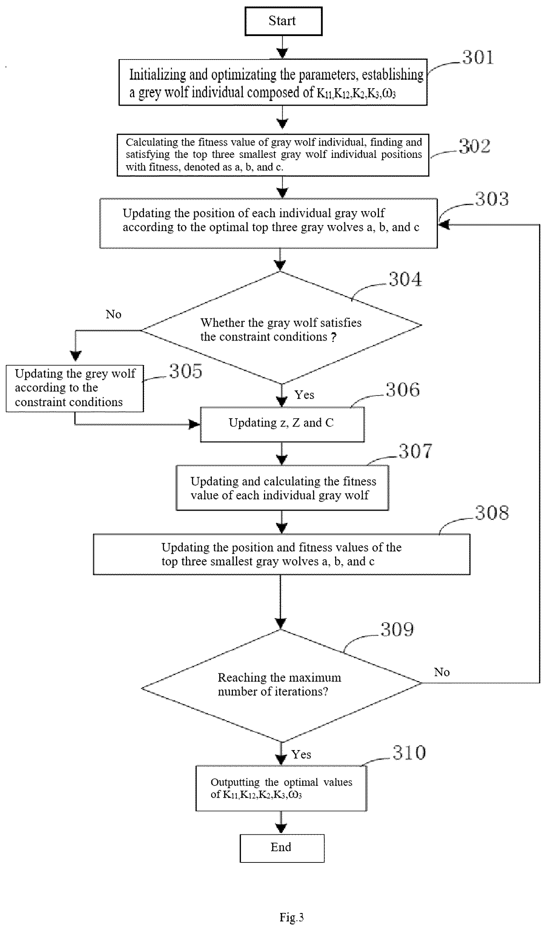

Fig.3 is a flowchart of optimizing and solving constraint conditions based on Grey Wolf Optimizer according to an example of the present invention, as shown in the Fig.3, the process includes steps 301-310:

Step 301, Establishing a grey wolf individual composed of weighting function parameters $K_{11}$, $K_{12}$, $K_2$, $K_3$ and $\omega_3$. Initializing the parameters of the Grey Wolf Optimizer, which includes: the number of search grey wolves, maximum iteration cycles, population size, upper and lower bounds of optimization coefficients, and randomly generate an initial search grey wolf population within the range of the optimization coefficient upper and lower bounds.

Step 302, Calculating the fitness value $f$ of each search gray wolf according to the optimization objective, finding and satisfying the top three smallest gray wolf individual positions with fitness, that is, selecting the optimal three search gray wolves, denoted as a, b, and c.

Step 303, Updating the position of each individual gray wolf according to the optimal top three gray wolves a, b, and c.

Step 304: Determining whether the current gray wolf satisfies the constraint conditions, i.e., the above formulas (6) - (11). If yes, proceeding to step 306, If not, proceeding to step 305.

Step 305, Updating the grey wolf according to the corresponding constraint conditions, and then proceeding to step 306.

Step 306, Updating the convergence factor and coefficient vector according to the current iteration count, and calculating the coefficient vectors $\vec{Z}$ and $\vec{C}$ using the following formula:

$$\vec{Z} = 2\vec{z} \cdot \vec{r_1} - \vec{z}$$

$$\vec{C} = 2\vec{r_2}$$

Wherein, $\vec{z}$ is the convergence factor, which linearly decreases from 2 to 0 during the iteration process, $\vec{r_1}$ and $\vec{r_2}$ are random vectors in [0,1].

Step 307, Updating and calculating the fitness value of each individual gray wolf. Specifically, using the following formulas to update the distance between the first three gray wolves and their prey according to the updated coefficient vector, and searching for the next step of approaching the position of the first three gray wolves:

$$\vec{D}_a = | \vec{C}_1 \cdot \vec{X}_a - \vec{X} |$$

$$\vec{D}_b = | \vec{C}_2 \cdot \vec{X}_b - \vec{X} |$$

$$\vec{D}_c = \mid \vec{C}_3 \cdot \vec{X}_c - \vec{X} \mid$$

$$\vec{X}_1 = \vec{X}_a - Z_1 \cdot \vec{D}_a$$

$$\vec{X}_2 = \vec{X}_b - Z_2 \cdot \vec{D}_b$$

$$\vec{X}_3 = \vec{X}_c - Z_3 \cdot \vec{D}_c$$

$$\vec{X}_{t+1} = \frac{\vec{X}_1 + \vec{X}_2 + \vec{X}_3}{3}$$

Wherein, $\vec{D}_a$, $\vec{D}_b$ and $\vec{D}_c$ respectively represent the distances between a, b, c and other individual gray wolves; $\vec{X}_a$, $\vec{X}_b$ and $\vec{X}_c$ respectively represent the current positions of a, b, and c; $\vec{C}_1$, $\vec{C}_2$ and $\vec{C}_3$ are random vectors; $\vec{X}$ is the current location of the grey wolf; $\vec{X}_1$, $\vec{X}_2$ and $\vec{X}_3$ describe the positions where the search wolf d approaches a, b, and c, while $\vec{X}_{t+1}$ provides the final position of the individual gray wolf d.

Step 308, Updating the position and fitness values of the top three smallest gray wolves a, b, and c.

Step 309, Determining whether the current iteration optimization has reached the maximum number of iterations. If yes, proceeding to step 310, if not, returning to step 303.

Step 310, Outputting the optimal values of $K_{11}$, $K_{12}$, $K_2$, $K_3$, $\omega_3$.

Through the above processes, the optimal values of $K_1$, $K_2$, $\omega_2$, $K_3$, $\omega_3$ can be obtained, and thus the optimal weighting functions $W_1$, $W_2$, $W_3$ can be obtained. Furthermore, a robust wind turbine torsional oscillation damper can be designed.

The examples of the present invention apply the Grey Wolf Optimizer to optimize and solve the weighting function which satisfies the stability design of the wind turbine shaft system, and can quickly obtain the optimal weighting function that satisfies the design requirements of the wind turbine torsional oscillation damper, thereby ensuring that robust characteristics of the designed robust wind turbine torsional oscillation damper in the event of system disturbance and uncertainty in the frequency of torsional oscillation after wind turbine participation in frequency regulation, and by providing stable damping support to the system through a robust wind turbine torsional oscillation damper, the stability of the wind turbine shaft system can be effectively ensured.

Based on similar inventive concepts, the examples of the present invention also provide a power system using a wind turbine, which has frequency regulation function. The system includes the above wind turbine torsional oscillation suppression device. This device can selectively implement the process of the above wind turbine torsional oscillation suppression method.

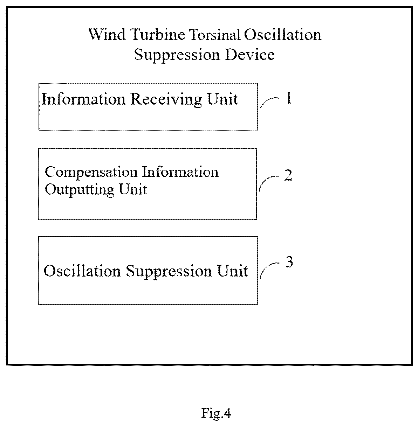

Fig.4 is a structural diagram of the wind turbine torsional oscillation suppression device. As shown in the Fig.4, the device comprises: an information receiving unit 1, a compensation information outputting unit 2 and an oscillation suppression unit 3, wherein:

information receiving unit 1, for receiving a rotor angular speed information of a wind turbine in the power systems using a wind turbine;

compensation information outputting unit 2, for inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer, in respond to the frequency regulation performed by the power system using a wind turbine;

oscillation suppression unit 3, for suppressing the wind turbine torsional oscillation generated by the frequency regulation, according to the reactive power compensation information.

In one example, the above device also comprises: a damper configuration unit, for configuring the wind turbine torsional oscillation damper.

The damper configuration unit comprises: a model construction module and a damper parameter configuration module, wherein:

model construction module, for constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model;

damper parameter configuration module, for performing a parameter configuration operation on the wind turbine torsional oscillation damper to be configured based on the weighting function model and the system state model according to a predetermined optimization objective.

Preferably, the above predetermined optimization objective is to minimize a performance indicator of the wind turbine torsional oscillation damper.

In one example, the above device further comprises: a weighting function configuration unit, for configuring the weighting function based on the Grey Wolf Optimizer and the weighting function model.

Specifically, the weighting function configuration unit further comprises: an optimization parameter determination module and a weighting function configuration module, wherein:

optimization parameter determination module, for determining an optimized parameter of the weighting function model satisfying the predetermined optimization objective by using the Grey Wolf Optimizer;

weighting function configuration module, for configuring the weighting function according to the determined optimized parameter of the weighting function model.

In one example, the above damper parameter configuration module comprises: a historical information processing submodule and a damper parameter configuration submodule, wherein:

historical information processing submodule, for configuring the system state model according to a historical information of a wind turbine state, so as to cause the system state model outputting the historical information of the rotor angular speed of a wind turbine;

damper parameter configuration submodule, for inputting the historical information of the rotor angular speed of a wind turbine to the wind turbine torsional oscillation damper, and performing the parameter configuration operation on the wind turbine torsional oscillation damper to be configured according to the weighting function model satisfying the predetermined optimization objective and a configured system state model.

In the examples of the present invention, when processing frequency regulation in a power system using a wind turbine, the information receiving unit 1 receives a rotor angular speed information of the wind turbine in the power system using a wind turbine, then the compensation information outputting unit 2 inputs the rotor angular speed information of the wind turbine to a preconfigured wind turbine torsional oscillation damper, then the wind turbine torsional oscillation damper outputs a reactive power compensation information, and after that according to the reactive power compensation information, the oscillation suppression unit 3 suppresses the wind turbine torsional oscillation generated by frequency regulation processing. The examples of the present invention apply the Grey Wolf Optimizer to optimize and solve the weighting function which satisfies the stability design of the wind turbine shaft system, and can quickly obtain the optimal weighting function that satisfies the design requirements of the wind turbine torsional oscillation damper, thereby ensuring that robust characteristics of the configured robust wind turbine torsional oscillation damper in the event of system disturbance and uncertainty in the frequency of torsional oscillation after wind turbine participation in frequency regulation, and by providing stable damping support to the system through a robust wind turbine torsional oscillation damper, the stability of the wind turbine shaft system can be effectively ensured.

The specific execution processes of the above units, modules and submodules can be found in the descriptions of the above method examples, and here won't repeated.

In actual operation, the above units, modules and submodules may be provided in combination or individually, and the present invention is not limited thereto.

The example further provides an electronic apparatus, which includes a memory, a processor, and a computer program stored in the memory and executable on the processor. The electronic apparatus may be a desktop computer, a tablet computer, a mobile terminal, etc., but the example is not limited thereto. In the example, the electronic apparatus may be implemented with reference to the above method example and the example of the wind turbine torsional oscillation suppression device, the contents of which are incorporated herein, and the repeated parts are not repeated.

The present invention further provides a computer-readable storage medium having a computer program stored thereon. When the computer program is executed by a processor, it implements the steps of the above method of the frequency regulation for the power grid using a wind turbine.

The examples of the present invention propose an optimization solution for a robust wind turbine torsional oscillation damper based on the Grey Wolf Optimizer. To address the problem of reduced damping ratio of wind turbine torsional oscillation after participating in power system frequency regulation, a robust wind turbine torsional oscillation damper is designed. The Grey Wolf Optimizer is used to optimize the weighting function required for the design of the robust wind turbine torsional oscillation damper, and a robust wind turbine torsional oscillation damper optimization method is further designed for wind power participation in power system frequency regulation application scenarios. This method applies the Grey Wolf Optimizer to optimize and solve the weighting function parameters that satisfy the stability design requirements of a robust wind turbine shaft system, thereby quickly obtaining the optimal weighting function that satisfies the design requirements of a robust torsional oscillation damper, ensuring the robustness of the designed robust torsional oscillation damper in the event of system disturbances and uncertainty in torsional oscillation frequency after wind turbine participation in frequency modulation. This solution enables workers without relevant robust wind turbine torsional oscillation dampers to quickly obtain the optimal weighting function required for robust wind turbine shaft system control, which is more conducive to the design and application of robust wind turbine torsional oscillation dampers.

The present invention uses specific examples to illustrate the principles and implementation methods of the present invention. The description of the above examples is only used to help understanding the method of the present invention and its core idea. At the same time, for the skilled person in the art, according to the idea of the present invention, there will be changes in the specific implementation methods and application scope. In summary, the content of this specification should not be understood as a limitation on the present invention.

## Claims

1. A method for suppressing torsional oscillation of a wind turbine, **characterized in that** the method is applied to a power system using a wind turbine with frequency regulation function, and the method comprises:

   receiving a rotor angular speed information of the wind turbine in the power system using a wind turbine;
   in respond to the frequency regulation performed by the power system using a wind turbine, inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer;
   according to the reactive power compensation information, suppressing the wind turbine torsional oscillation generated by the frequency regulation.

2. The method according to claim 1, **characterized in that** the wind turbine torsional oscillation damper is configured by:

   constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model;
   according to a predetermined optimization objective, performing a parameter configuration operation on the wind turbine torsional oscillation damper to be configured based on the weighting function model and the system state model.

3. The method according to claim 2, **characterized in that** the predetermined optimization objective is to minimize a performance indicator of the wind turbine torsional oscillation damper, and the feature "weighting function is configured based on the Grey Wolf Optimizer and the weighting function model" comprises:

   determining an optimized parameter of the weighting function model satisfying the predetermined optimization objective by using the Grey Wolf Optimizer;
   configuring the weighting function according to the determined optimized parameter of the weighting function model.

4. The method according to claim 2, **characterized in that** the feature "according to a predetermined optimization objective, performing a parameter configuration operation on the wind turbine torsional oscillation damper to be configured based on the weighting function model and the system state model" comprises:

   configuring the system state model according to a historical information of a wind turbine state, so as to cause the system state model outputting the historical information of the rotor angular speed of a wind turbine;
   inputting the historical information of the rotor angular speed of a wind turbine to the wind turbine torsional oscillation damper, and according to the weighting function model satisfying the predetermined optimization objective and a configured system state model, performing the parameter configuration operation on the wind turbine torsional oscillation damper to be configured.

5. A wind turbine torsional oscillation suppression device, **characterized in that** the device is applied to a power system using a wind turbine with frequency regulation function, and the device comprises:

> an information receiving unit, for receiving a rotor angular speed information of a wind turbine in the power systems using a wind turbine;
> a compensation information outputting unit, for inputting the rotor angular speed information of the wind turbine to a preconfigured wind turbine torsional oscillation damper, so as to cause the wind turbine torsional oscillation damper outputting a reactive power compensation information, wherein the wind turbine torsional oscillation damper is configured based on a weighting function of the power system using a wind turbine, and the weighting function is configured based on the Grey Wolf Optimizer, in respond to the frequency regulation performed by the power system using a wind turbine;
> an oscillation suppression unit, for suppressing the wind turbine torsional oscillation generated by the frequency regulation, according to the reactive power compensation information.

6. The device according to claim 5, **characterized in that**, the device further comprises:

> a damper configuration unit, for configuring the wind turbine torsional oscillation damper,
> wherein the damper configuration unit comprises:

>> a model construction module, for constructing a frequency regulation model for the power system using a wind turbine, wherein the frequency regulation model for the power system using a wind turbine comprises a weighting function model, a system state model, and a wind turbine torsional oscillation damper to be configured, wherein the weighting function is configured based on the Grey Wolf Optimizer and the weighting function model;
>> a damper parameter configuration module, for performing a parameter configuration operation on the wind turbine torsional oscillation damper to be configured based on the weighting function model and the system state model according to a predetermined optimization objective.

7. The device according to claim 6, **characterized in that**, the predetermined optimization objective is to minimize a performance indicator of the wind turbine torsional oscillation damper, and the device further comprises:

> a weighting function configuration unit, for configuring the weighting function based on the Grey Wolf Optimizer and the weighting function model,
> wherein the weighting function configuration unit further comprises:

>> an optimization parameter determination module, for determining an optimized parameter of the weighting function model satisfying the predetermined optimization objective by using the Grey Wolf Optimizer;
>> a weighting function configuration module, for configuring the weighting function according to the determined optimized parameter of the weighting function model.

8. The device according to claim 6, **characterized in that** the damper parameter configuration module comprises:

> a historical information processing submodule, for configuring the system state model according to a historical information of a wind turbine state, so as to cause the system state model outputting the historical information of the rotor angular speed of a wind turbine;
> a damper parameter configuration submodule, for inputting the historical information of the rotor angular speed of a wind turbine to the wind turbine torsional oscillation damper, and performing the parameter configuration operation on the wind turbine torsional oscillation damper to be configured according to the weighting function model satisfying the predetermined optimization objective and a configured system state model.

9. A power system using a wind turbine, **characterized in that** the power system using a wind turbine has a frequency regulation function, and the power system using a wind turbine comprises the wind turbine torsional oscillation suppression device according to any one of claims 5 to 8.

10. A computer apparatus comprising a memory, a processor, and a computer program stored on the memory and executable on the processor, wherein the processor implements the steps of any one of claims 1 to 4 when executing the computer program.

Receiving a rotor angular speed
information of the wind turbine in the
power system using a wind turbine

101

In respond to the frequency regulation performed by the
power system using a wind turbine, inputting the rotor
angular speed information of the wind turbine to a
preconfigured wind turbine torsional oscillation damper, so
as to cause the wind turbine torsional oscillation damper
outputting a reactive power compensation information

102

According to the reactive power compensation information,
suppressing the wind turbine torsional oscillation generated
by the frequency regulation

103

Fig.1

Fig.2

Start

Initializing and optimizating the parameters, establishing a grey wolf individual composed of $K_{11}, K_{12}, K_2, K_3, \omega_3$ — 301

Calculating the fitness value of gray wolf individual, finding and satisfying the top three smallest gray wolf individual positions with fitness, denoted as a, b, and c. — 302

Updating the position of each individual gray wolf according to the optimal top three gray wolves a, b, and c — 303

Whether the gray wolf satisfies the constraint conditions ? — 304

No

Updating the grey wolf according to the constraint conditions — 305

Yes

Updating z, Z and C — 306

Updating and calculating the fitness value of each individual gray wolf — 307

Updating the position and fitness values of the top three smallest gray wolves a, b, and c — 308

Reaching the maximum number of iterations? — 309

No

Yes

Outputting the optimal values of $K_{11}, K_{12}, K_2, K_3, \omega_3$ — 310

End

Fig.3

Wind Turbine Torsinal Oscillation
Suppression Device

Information Receiving Unit — 1

Compensation Information
Outputting Unit — 2

Oscillation Suppression Unit — 3

Fig.4

## INTERNATIONAL SEARCH REPORT

| | International application No. |
|---|---|
| | **PCT/CN2024/101737** |

**A.    CLASSIFICATION OF SUBJECT MATTER**

H02J 3/38(2006.01)i;  H02J 3/18(2006.01)i;  H02J 3/00(2006.01)i

According to International Patent Classification (IPC) or to both national classification and IPC

**B.    FIELDS SEARCHED**

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 风机, 调频, 扭矩, 振荡, 灰狼, 无功, 轴系, 轴系扭振, torque, oscillat+, frequency modulat+

**C.    DOCUMENTS CONSIDERED TO BE RELEVANT**

| Category* | Citation of document, with indication, where appropriate, of the relevant passages | Relevant to claim No. |
|---|---|---|
| PX | CN 116961101 A (CHINA HUANENG GROUP CLEANING ENERGY TECHNOLOGY RESEARCH INSTITUTE CO., LTD. et al.) 27 October 2023 (2023-10-27)<br>claims 1-10 | 1-10 |
| A | CN 116203845 A (CHINA HUANENG GROUP CLEANING ENERGY TECHNOLOGY RESEARCH INSTITUTE CO., LTD. et al.) 02 June 2023 (2023-06-02)<br>description, paragraphs 0006-0041 | 1-10 |
| A | CN 115579911 A (CHINA HUANENG CLEAN ENERGY RESEARCH INSTITUTE) 06 January 2023 (2023-01-06)<br>entire document | 1-10 |
| A | CN 116165898 A (SHENGDONG RUDONG OFFSHORE WIND POWER GENERATION CO., LTD. et al.) 26 May 2023 (2023-05-26)<br>entire document | 1-10 |
| A | CN 109217289 A (NANJING UNIVERSITY OF SCIENCE AND TECHNOLOGY) 15 January 2019 (2019-01-15)<br>entire document | 1-10 |

☑ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 September 2024** | **10 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/101737** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 116191475 A (CHINA HUANENG GROUP CLEANING ENERGY TECHNOLOGY RESEARCH INSTITUTE CO., LTD. et al.) 30 May 2023 (2023-05-30) entire document | 1-10 |
| A | US 2007203632 A1 (DENSO CORP.) 30 August 2007 (2007-08-30) entire document | 1-10 |

Form PCT/ISA/210 (second sheet) (July 2022)

**INTERNATIONAL SEARCH REPORT**
Information on patent family members

International application No.

**PCT/CN2024/101737**

| Patent document cited in search report | | | Publication date (day/month/year) | Patent family member(s) | | | Publication date (day/month/year) |
|---|---|---|---|---|---|---|---|
| CN | 116961101 | A | 27 October 2023 | None | | | |
| CN | 116203845 | A | 02 June 2023 | None | | | |
| CN | 115579911 | A | 06 January 2023 | None | | | |
| CN | 116165898 | A | 26 May 2023 | None | | | |
| CN | 109217289 | A | 15 January 2019 | None | | | |
| CN | 116191475 | A | 30 May 2023 | None | | | |
| US | 2007203632 | A1 | 30 August 2007 | JP | 2007218138 | A | 30 August 2007 |
| | | | | JP | 4665790 | B2 | 06 April 2011 |

Form PCT/ISA/210 (patent family annex) (July 2022)